# EUROPÄISCHE PATENTSCHRIFT

(11) **EP 2 409 895 B1**
(45) Veröffentlichungstag und Bekanntmachung des Hinweises auf die Patenterteilung: **24.12.2014**
(21) Anmeldenummer: 11005813.8
(22) Anmeldetag: 15.07.2011
(51) Int. Cl.: B62D 5/00, B62D 5/04, B62D 5/09, B62D 6/00

(54) **Verfahren zum Einstellen eines Rückstellmoments**
Method for adjusting a self-aligning torque
Procédé destiné au réglage d'un moment de recul

(30) Priorität: 21.07.2010 DE 102010031707
(43) Veröffentlichungstag der Anmeldung: 25.01.2012
(73) Patentinhaber: AUDI AG, 85045 Ingolstadt (DE)
(72) Erfinder: Koch, Tilo, 85057 Ingolstadt (DE)

(56) Entgegenhaltungen:
- EP-A1- 1 518 721
- GB-A- 2 388 829
- US-A- 5 729 107

## Beschreibung

Die Erfindung betrifft ein Verfahren zum Einstellen eines Rückstellmoments an einer Lenkhandhabe eines Kraftwagens mit einer elektromechanischen Fremdkraftlenkvorrichtung, also eines Moments, welches einem Lenkausschlag der Lenkhandhabe entgegenwirkt und diese wieder in ihre Neutralstellung zu bewegen trachtet.

Kraftwagen können mit elektromechanischen Lenksystemen ausgestattet werden, bei welchen keine mechanische bzw. hydraulische Kopplung zwischen einer Lenkhandhabe und einer gelenkten Fahrzeugachse vorliegt. Solche Lenksysteme sind als Fremdkraftlenkung bzw. Steer-by-Wire-Lenkung bekannt.

Durch den Wegfall der mechanischen Kopplung wirken die an den gelenkten Rädern auftretenden Momente nicht mehr auf die Lenkhandhabe zurück. Der Fahrer eines solchen Kraftwagens erhält also keine unmittelbare haptische Rückmeldung über die auftretenden Lenkmomente. Eine derartige Rückmeldung ist jedoch von Bedeutung, um dem Fahrer eine Beurteilung des aktuellen fahrdynamischen Zustandes des Kraftwagens zu ermöglichen. Gleichzeitig verhindern die bei üblichen Kraftwagen auf die Lenkhandhabe ausgeübten Rückstellkräfte schnelle, ungewollte Lenkvorgaben durch den Fahrer und lassen den Fahrer deutlich erkennen, ob sich die Lenkhandhabe in Neutralstellung befindet oder eine Lenkkraft auf die Räder auswirkt. Der Wegfall dieser haptischen Rückmeldung wirkt sich daher negativ auf die Fahrsicherheit und das Fahrgefühl aus.

Es ist deswegen üblich, bei elektromechanischen Fremdkraftlenkungen mittels eines Lenkmomentaktors ein Rückstellmoment auf die Lenkhandhabe auszuüben. Dies soll die übliche Kraftrückmeldung von den gelenkten Rädern simulieren und so die Fahrsicherheit und das Fahrgefühl verbessern.

Üblicherweise wird die Größe des aufzubringenden Rückstellmomentes rechnerisch aus verschiedenen fahrdynamischen Parametern des Kraftwagens bestimmt. Von besonderer Bedeutung ist hierbei die auf den Kraftwagen wirkende Querbeschleunigung. Diese Querbeschleunigung kann entweder unmittelbar gemessen oder aus einer Fahrtgeschwindigkeit und einem Lenkwinkel berechnet werden. Beide Möglichkeiten zur Bestimmung der Querbeschleunigung sind beispielsweise aus der gattungsbildenden DE 199 12 169 A1 bekannt.

Bei einer direkten Messung der Querbeschleunigung kann es jedoch auf Grund der Trägheit der hierzu verwendeten Sensoren zu einer Zeitverzögerung zwischen der tatsächlich wirkenden Querbeschleunigung und den auf Basis der Messwerte ausgeübten Rückstellmomenten kommen. Ein noch deutlicherer Einfluss wird durch den Anbringungsort der Sensoren ausgeübt. Seitenkräfte, die sich an den Rädern des Kraftwagens aufbauen führen zeitversetzt zu einer Querbeschleunigung und damit Bewegung der Karosserie, an welcher die Querbeschleunigungssensoren angebracht sind. Die insgesamt resultierende Zeitverzögerung kann wiederum zu einem verschlechterten Fahrgefühl und zu einer reduzierten Fahrsicherheit führen.

Die Einstellung des Rückstellmoments an der Lenkhandhabe in Abhängigkeit von einer gemessenen Querbeschleunigung ist beispielsweise aus dem Dokument GB 2 388 829 A bekannt.

Aus dem Dokument EP 1 518 721 A1 ist ein Verfahren zur Bestimmung eines Rollwinkels eines Kraftfahrzeugs bekannt. Hierbei wird sowohl eine gemessene als auch eine geschätzte Querbeschleunigung berücksichtigt.

Das Dokument US 5 729 107 A beschreibt eine Methode, wie ein Reibungskoeffizient der Straße unter Berücksichtigung der gemessenen sowie der geschätzten Querbeschleunigung bestimmt werden kann.

Auch die Schätzung der Querbeschleunigung auf Basis anderer fahrdynamischen Parameter ist problematisch, da abhängig vom Fahrzustand und vom verwendeten Fahrdynarnikmodell die Schätzungsqualität sehr schlecht sein kann. Dies ist insbesondere in fahrdynamischen Grenzzuständen, beispielsweise bei hohen Querbeschleunigungen oder stark variierendem Reibwert der Fahrbahn problematisch. In diesen Situationen spiegelt die auf die Lenkhandhabe ausgeübte Rückstellkraft nicht den realen Fahrzustand des Kraftwagens wieder, so dass der Fahrer auf Grund der haptischen Rückmeldung gegebenenfalls Fehlentscheidungen trifft.

Eine besonders realistische Einstellung des Rückstellmomentes ist auf Grundlage einer direkten Messung der auf die Räder des Kraftwagens wirkenden Kräfte möglich. Die Sensorik für eine derartige Messung ist jedoch aufwendig und sehr teuer.

Der vorliegenden Erfindung liegt somit die Aufgabe zu Grunde, ein Verfahren der eingangs genannten Art bereitzustellen, welches eine einfache und genaue Einstellung eines Rückstellmomentes an der Lenkhandhabe des Kraftwagens ermöglicht.

Diese Aufgabe wird durch ein Verfahren mit den Merkmalen des Patentanspruchs 1 gelöst.

Bei einem derartigen Verfahren wird sowohl eine Querbeschleunigung des Kraftwagens als auch wenigstens ein weiterer, einen Fahrzustand des Kraftwagens charakterisierender Parameterwert gemessen. Mittels eines Fahrdynamikmodells wird aus dem wenigstens einen weiteren Parameterwert eine geschätzte Querbeschleunigung des Kraftwagens bestimmt. Aus der gemessenen und der geschätzten Querbeschleunigung wird sodann eine angenommene Querbeschleunigung bestimmt, die anschließend zu Bestimmung des aufzubringenden Rückstellmoments an einer Lenkhandhabe des Kraftwagens verwendet wird. Schließlich wird dieses Rückstellmoment an der Lenkhandhabe mittels eines Lenkmomentenaktors eingestellt.

Das erfindungsgemäße Verfahren kombiniert also die Messung und Schätzung der Querbeschleunigung eines Kraftwagens, um hieraus eine besonders zuverlässige Einstellung von Rückstellmomenten an der Lenkhandhabe des Kraftwagens zu ermöglichen. Dies ist möglich, da die eingangs geschilderten Schwächen der direkten Messung bzw. der Schätzung der Querbeschleunigung des Kraftwagens bei unterschiedlichen fahrdynamischen Zuständen des Kraftwagens unterschiedlich stark ausgeprägt sind. Die Fehler der beiden Methoden zur Bestimmung der Querbeschleunigung können sich daher durch die Kombination weitestgehend ausgleichen, so dass auf einfachste Weise ein Rückstellmoment eingestellt werden kann, welches demjenigen einer konventionellen Lenkung besonders gut entspricht, ohne dass kostenaufwändige Sensoren an den Rädern des Kraftwagens notwendig sind.

In einer bevorzugten Ausführungsform der Erfindung wird die angenommene Querbeschleunigung, also die in der Folge zur Bestimmung des Rückstellmoments zu verwendende Querbeschleunigung als gewichteter Mittelwert der gemessenen und geschätzten Querbeschleunigung bestimmt. Dies ermöglicht eine besonderes einfache und wenig rechenaufwändige Bestimmung der geschätzten Querbeschleunigung.

Vorzugsweise wird hierbei die Gewichtung der gemessenen und geschätzten Querbeschleunigung bei Bildung des gewichteten Mittelwert in Abhängigkeit vom Wert der gemessenen und/oder der geschätzten Querbeschleunigung gewählt. Beispielsweise kann bei kleineren Querbeschleunigungen, in welchen das Fahrdynamikmodell die Realität gut abbildet, der geschätzte Wert besonders stark gewichtet werden, während bei höheren Querbeschleunigungen, bei denen das Fahrdynamikmodell wesentlich schlechtere Daten liefert, die gemessene Querbeschleunigung stärker gewichtet wird.

Neben der Querbeschleunigung selbst kann zur Auswahl der Gewichtung von gemessener und geschätzter Querbeschleunigung auch der wenigstens eine weitere, den Fahrzustand charakterisierenden Parameterwert gewählt werden. Durch diese zusätzliche Information bezüglich der Fahrdynamik des Kraftwagens lässt sich eine besonders realistische Abschätzung der Querbeschleunigung realisieren.

Alternativ zur Verwendung eines gewichteten Mittelwertes zur Bestimmung der angenommenen Querbeschleunigung kann diese auch mittels eines Kalmanfilters aus der gemessenen und der geschätzten Querbeschleunigung bestimmt werden. Das Konzept des Kalmanfilters betrifft ein Verfahren zum Schätzen der zeitlichen Entwicklung linearer Systeme, mittels welchem Störungen von einem Messsignal entfernt werden können. Das Filter benötigt hierzu ein Modell des zu schätzenden Systems, welches beispielsweise in Form des verwendeten Fahrdynamikmodells in das Filter einfließen kann. Dies ermöglicht eine Korrektur der gemessenen Querbeschleunigung auf Grundlage des verwendeten Fahrdynamikmodells, so dass eine an den Fahrzustand angepasste angenommene Querbeschleunigung berechnet wird. Dies ermöglicht eine besonders genaue Modellierung der angenommenen Querbeschleunigung und damit eine besonders gute Qualität der resultierenden Rückstellmomente auf die Lenkhandhabe.

In einer weiteren bevorzugten Ausführungsform der Erfindung charakterisiert der wenigstens eine weitere Parameterwert eine Geschwindigkeit und/oder einen Lenkwinkel und/oder eine Gierrate des Kraftwagens. Die genannten Parameter sind messtechnisch besonders einfach erhältlich und werden üblicherweise in modernen Kraftwagen ohnehin gemessen, da dies für die Fahrdynamikregelung des Kraftwagens notwendig ist. Zur Durchführung des Verfahrens sind somit keine zusätzlichen Sensoren notwendig, so dass das Verfahren besonders kostengünstig implementiert werden kann.

Vorzugsweise wird die geschätzte Querbeschleunigung mittels eines Einspurmodells bestimmt. Das Einspurmodell ist ein vereinfachtes Modell zur Beschreibung des Lenkverhaltens des Kraftwagens, welches unter Annahme einer konstanten Geschwindigkeit auf einfache Art und Weise eine Berechnung der Querbeschleunigung des Kraftwagens ermöglicht. Das Einspurmodel liefert für Querbeschleunigungen bis etwa 0,4 g gute Ergebnisse, so dass im Normalbetrieb des Kraftwagens eine zuverlässige Abschätzung der Querbeschleunigung möglich ist. Lediglich unter Extrembedingungen werden die Ergebnisse des Einspurmodells ungenau, so dass eine Korrektur durch die gemessenen Querbeschleunigungen zu empfehlen ist.

Bei einer weiteren bevorzugten Ausführungsform der Erfindung wird bei der Bestimmung des aufzubringenden Rückstellmoments der wenigstens eine weitere, einen Fahrzustand charakterisierende Parameter berücksichtigt. Hierdurch können neben der Querbeschleunigung weitere fahrdynamische Größen in die Berechnung des Rückstellmoments eingehen, wodurch eine verbesserte Kraftrückmeldung an den Fahrer des Kraftwagens ermöglicht und somit die Fahrsicherheit und der Fahrkomfort erhöht wird.

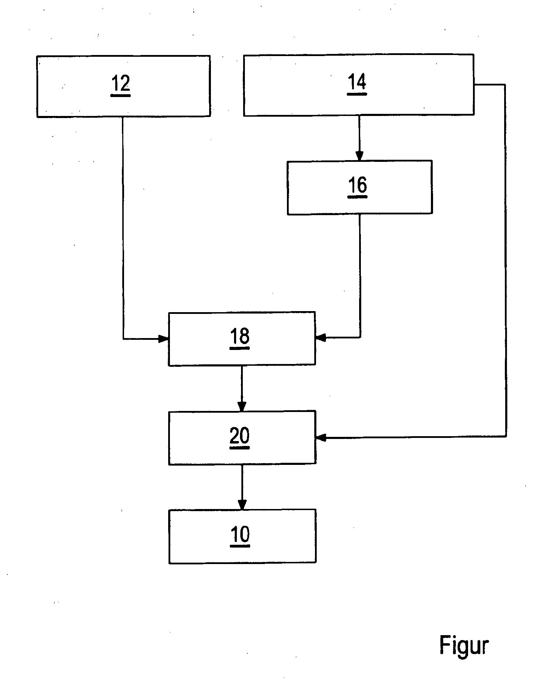

Im Folgenden wird die Erfindung anhand der Zeichnung näher erläutert. Die einzige Figur zeigt hierbei ein Blockdiagramm zum Beschreiben einer Steuerstrecke zum Steuern eines Rückstellmomentes auf eine Lenkhandhabe eines Kraftwagens mittels eines Ausführungsbeispiels des erfindungsgemäßen Verfahrens.

Bei Kraftwagen mit elektromechanischen Fremdkraftlenkungen besteht keine mechanische oder hydraulische Verbindung zwischen der Lenkhandhabe des Kraftwagens - beispielsweise einem Lenkrad oder einem Joystick - und einer zu lenkenden Achse. Die Lenkung wird vielmehr durch Messung einer Stellung der Lenkhandhabe und durch entsprechendes Ansteuern eines elektromechanischen Aktors, der die eigentliche Lenkbewegung durchführt, bewerkstelligt.

Aus diesem Grund findet keine direkte Kraftrückmeldung von den gelenkten Rädern auf die Lenkhandhabe statt. Eine derartige Kraftrückmeldung ist jedoch wesentlich für die Fahrsicherheit und das Fahrgefühl. Die haptische Rückmeldung informiert den Fahrer des Kraftwagens über den momentanen fahrdynamischen Zustand seines Kraftwagens, verhindert ungewollte Lenkbewegungen und ermöglicht dem Fahrer die Erkennung einer Neutralstellung der Lenkung.

Um auch bei elektromechanischen Fremdkraftlenkungen eine solche Rückmeldung an den Fahrer zu ermöglichen, ist üblicherweise ein Lenkmomentenaktor vorgesehen, der beispielsweise als Elektromotor ausgebildet sein kann und eine Kraft auf die Lenkhandhabe ausübt. Die ausgeübte Kraft bzw. das ausgeübte Moment soll dabei die mechanische Kraftführung von den gelenkten Rädern zum Lenkrad eines konventionell gelenkten Kraftwagen simulieren.

Um dies zu ermöglichen, wird mit einer Messvorrichtung 12 eine Querbeschleunigung des Kraftwagens gemessen. Diese Querbeschleunigung ist die wesentliche fahrzeugunabhängige Einflussgröße auf die auftretenden Lenkkräfte und ermöglicht daher eine gute Modellierung der Rückstellkräfte auf die Lenkhandhabe.

Da die Messeinrichtung 12 jedoch eine merkliche Totzeit besitzt, sind allein auf Grundlage der gemessenen Querbeschleunigung bestimmte Rückstellmomente zeitverzögert gegenüber der realen fahrdynamischen Situation. Um dies zu korrigieren, wird mit wenigstens einer weiteren Messvorrichtung 14 eine weitere Fahrzustandsgröße bestimmt. Hierbei kann es sich um die Geschwindigkeit des Kraftwagens, den Lenkwinkel oder die Gierrate des Kraftwagens handeln.

Die von der weiteren Messvorrichtung 14 gewonnenen Größen werden an ein Modellierungsglied 16 übermittelt. Dieses kann als eigene Schaltungsanordnung realisiert oder Bestandteil eines Programms einer Steuereinrichtung sein. Auf Grundlage eines Fahrdynamikmodells berechnet das Modellierungsglied 16 einen Schätzwert für die Querbeschleunigung. Hierzu kann beispielsweise das so genannte Einspurmodell Anwendung finden. Beim Einspurmodell handelt es ich um ein vereinfachtes Fahrdynamikmodell, welches lediglich zwei Freiheitsgrade, nämlich die Gierbewegung und die Schwimmbewegung des Fahrzeugs berücksichtigt und auf der Annahme der konstanten Fahrgeschwindigkeit beruht. Wank-, Hub- und Nickbewegungen werden dagegen vernachlässigt. Ebenfalls vernachlässigt werden Radiastdifferenzen zwischen kurveninnerem und kurvenäußerem Rad einer Achse sowie zwischen Vorderachse und Hinterachse. Die Radaufstandspunkte werden im Rahmen des Einspurmodels achsweise in der Fahrzeugmitte zusammengefasst. Das Einspurmodell kann unter Annahme des Vorhandenseins einer trockenen Fahrbahn und einer Querbeschleunigung von weniger 0,4 g realistische Werte für die Querbeschleunigung des Kraftwagens abschätzen.

Die Sensoren 14 zur Bestimmung der Fahrgeschwindigkeit, des Lenkwinkels und der Gierrate leiden nicht im gleichen Maße unter der eingangs geschilderten Zeitverzögerung zwischen dem Aufbau von Radkräften und der Detektion, so dass die vom Modellierungsglied 16 geschätzte Querbeschleunigung nicht zu einer Zeitverzögerung bei den daraus bestimmten Rückstellmomenten für die Lenkhandhabe führt. In extremen Fahrsituationen kann das Einspurmodell jedoch seine Gültigkeit verlieren, so dass die geschätzte Querbeschleunigung ungenau wird. Um die geschilderten Probleme bei der direkten Messung und der Abschätzung der Querbeschleunigung zu kompensieren, während die gemessene und geschätzte Querbeschleunigung an ein Mischerglied 18 übermittelt. Auch dieses kann als eigene Schaltungsanordnung bzw. Steuereinheit ausgelegt sein oder gemeinsam mit den Modellierungsgliedern 16, 20 als Programm in einer gemeinsamen Steuereinheit ablaufen. Aus den beiden Querbeschleunigungswerten wird im Mischerglied 18 eine angenommene Querbeschleunigung bestimmt. Diese kann durch gewichtete Mittelung der gemessenen und geschätzten Querbeschleunigung erfolgen. Die jeweiligen Gewichtungen für die gemessene und geschätzte Querbeschleunigung können dabei selbst abhängig von der Größe der jeweiligen Querbeschleunigungen sein, um diejenigen Bereiche in denen die Messung bzw. die Schätzung besondere Schwächen aufweisen, besonders gut zu kompensieren. Auch ein Kalmanfilter kann als Mischerglied Anwendung finden. Das verwendete Fahrdynamikmodell wird dann als inneres Modell des Kalmanfilters verwendet, auf dessen Grundlage die gemessenen Querbeschleunigung gefiltert wird.

Die so ermittelte angenommene Querbeschleunigung wird schließlich an ein weiteres Modellierungsglied 20 übermittelt. Das Modellierungsglied 20 empfängt ebenfalls die Messwerte der weiteren Messeinrichtung 14 bzgl. der Fahrtgeschwindigkeit des Lenkwinkels und der Gierrate. Aus diesen Werten und der angenommenen Querbeschleunigung wird im Modellierungsglied 20 ein einzustellendes Rückstellmoment für die Lenkhandhabe bestimmt. Dies kann durch die physikalische Modellierung eines konventionellen Lenkungssystems geschehen. Hierdurch wird ein Rückstellmoment für die Lenkhandhabe erhalten, die dem in konventionellen Fahrzeugen auftretenden Rückstellmomenten besonders genau entspricht. Das jeweilige Rückstellmoment wird schließlich auf den Lenkmomentenaktor 10 übermittelt und von diesem auf die Lenkhandhabe ausgeübt. Der Fahrer erhält somit eine Kraftrückmeldung, die derjenigen eines konventionellen Kraftwagens entspricht, so dass trotz der fehlenden mechanischen Verbindung zwischen Lenkhandhabe und gelenkter Achse Fahrgefühl und Fahrsicherheit derjenigen eines konventionell gelenkten Kraftwagens entsprechen.

## Patentansprüche

1. Verfahren zum Einstellen eines Rückstellmomentes an einer Lenkhandhabe eines Kraftwagens mit einer elektromechanischen Fremdkraftlenkvorrichtung, mit den Schritten:
a) Messen einer Querbeschleunigung des Kraftwagens;
b) Messen wenigstens eines weiteren einen Fahrzustand des Kraftwagens charakterisierenden Parameterwerts;
**gekennzeichnet durch**
c) Bestimmen einer geschätzten Querbeschleunigung des Kraftwagens aus dem wenigstens einen weiteren Parameterwert mittels eines Fahrdynamikmodells;
d) Bestimmen einer angenommenen Querbeschleunigung aus der gemessenen und der geschätzten Querbeschleunigung;
e) Bestimmen des aufzubringenden Rückstellmoments an der Lenkhandhabe aus der angenommenen Querbeschleunigung;
f) Einstellen des Rückstellmoments an der Lenkhandhabe mittels eines Lenkmomentenaktors (10).

2. Verfahren nach Anspruch 1,
**dadurch gekennzeichnet, dass**
die angenommene Querbeschleunigung als gewichteter Mittelwert der gemessenen und geschätzten Querbeschleunigung bestimmt wird.

3. Verfahren nach Anspruch 2,
**dadurch gekennzeichnet, dass**
die Gewichtung der gemessenen und geschätzten Querbeschleunigung in Abhängigkeit des Wertes der gemessenen und/oder geschätzten Querbeschleunigung gewählt wird.

4. Verfahren nach Anspruch 2 oder 3,
**dadurch gekennzeichnet, dass**
die Gewichtung der gemessenen und geschätzten Querbeschleunigung in Abhängigkeit des wenigstens einen weiteren den Fahrzustand charakterisierenden Parameterwerts gewählt wird.

5. Verfahren nach Anspruch 1,
**dadurch gekennzeichnet, dass**
die angenommene Querbeschleunigung mittels eines Kalman-Filters aus der gemessenen und der geschätzten Querbeschleunigung bestimmt wird.

6. Verfahren nach einem der Ansprüche 1 bis 5,
**dadurch gekennzeichnet, dass**
der wenigstens eine weitere Parametenrvert eine Geschwindigkeit und/oder einen Lenkwinkel und/oder eine Gierrate charakterisiert.

7. Verfahren nach einem der Ansprüche 1 bis 6,
**dadurch gekennzeichnet, dass**
die geschätzte Querbeschleunigung mittels eines Einspurmodells bestimmt wird.

8. Verfahren nach einem der Ansprüche 1 bis 7,
**dadurch gekennzeichnet, dass**
bei der Bestimmung des aufzubringenden Rückstellmoments der wenigstens eine weitere einen Fahrzustand charakterisierende Parameterwert berücksichtigt wird.

## Claims

1. Method of adjusting a restoring torque on a steering handle of a motor vehicle having an electromechanical power steering mechanism, comprising the steps of:
a) measuring a lateral acceleration of the vehicle;
b) measuring at least one other parameter value that characterises a driving condition of the vehicle;
**characterised by**
c) determining an estimated lateral acceleration of the vehicle from the at least one other parameter value by means of a dynamic vehicle-behaviour model;
d) determining an assumed lateral acceleration from the measured and estimated lateral accelerations;
e) determining the restoring torque that is to be applied to the steering handle from the assumed lateral acceleration;
f) adjusting the restoring torque on the steering handle by means of a steering moment actuator (10).

2. Method according to claim 1,
**characterised in that**
the assumed lateral acceleration is determined as a weighted average of the measured and estimated lateral acceleration.

3. Method according to claim 2,
**characterised in that**
the weighting of the measured and estimated lateral acceleration is selected as a function of the value of the measured and/or estimated lateral acceleration.

4. Method according to claim 2 or 3,
**characterised in that**
the weighting of the measured and estimated lateral acceleration is selected as a function of the at least one other parameter value that characterises the driving condition.

5. Method according to claim 1,
**characterised in that**
the assumed lateral acceleration is determined from the measured and estimated lateral acceleration using a Kalman filter.

6. Method according to one of claims 1 to 5,
**characterised in that**
the at least one other parameter value characterises a speed and/or a steering angle and/or a yaw rate.

7. Method according to one of claims 1 to 6,
**characterised in that**
the estimated lateral acceleration is determined using a single-track model.

8. Method according to one of claims 1 to 7,
**characterised in that** the at least one other parameter value that characterises the driving condition is taken into consideration when determining the restoring torque that is to be applied.

## Revendications

1. Procédé de réglage d'un moment de rappel sur une manette de direction d'un véhicule automobile avec un dispositif de direction électromécanique actionné par une force étrangère, comprenant les étapes consistant à :
a) mesurer une accélération transversale du véhicule automobile ;
b) mesurer au moins une autre valeur paramétrique caractérisant une situation de marche du véhicule automobile ;
**caractérisé par** les étapes consistant à :
c) déterminer une accélération transversale estimée du véhicule automobile à partir de la moins une autre valeur paramétrique au moyen d'un modèle de dynamique de mouvement des véhicules ;
d) déterminer une accélération transversale supposée à partir de l'accélération transversale mesurée et de l'accélération transversale estimée ;
e) déterminer le moment de rappel à appliquer à la manette de direction à partir de l'accélération transversale supposée ; et
f) régler le moment de rappel sur la manette de direction au moyen d'un actionneur de moment de direction (10).

2. Procédé selon la revendication 1,
**caractérisé en ce que** :
l'accélération transversale supposée est déterminée en tant que valeur moyenne pondérée de l'accélération transversale mesurée et de l'accélération transversale estimée.

3. Procédé selon la revendication 2,
**caractérisé en ce que** :
la pondération de l'accélération transversale mesurée et de l'accélération transversale estimée est choisie en fonction de la valeur de l'accélération transversale mesurée et/ou des l'accélération transversale estimée.

4. Procédé selon la revendication 2 ou la revendication 3,
**caractérisé en ce que** :
la pondération de l'accélération transversale mesurée et de l'accélération transversale estimée est choisie en fonction de la au moins une autre valeur paramétrique caractérisant la situation de marche.

5. Procédé selon la revendication 1,
**caractérisé en ce que** :
l'accélération transversale supposée est déterminée au moyen d'un filtre de Kalman à partir de l'accélération transversale mesurée et de l'accélération transversale estimée.

6. Procédé selon l'une quelconque des revendications 1 à 5,
**caractérisé en ce que** :
la au moins une autre valeur paramétrique caractérise une vitesse et/ou un angle de direction et/ou une vitesse de lacet.

7. Procédé selon l'une quelconque des revendications 1 à 6,
**caractérisé en ce que** :
l'accélération transversale estimée est déterminée au moyen d'un modèle monopiste.

8. Procédé selon l'une quelconque des revendications 1 à 7,
**caractérisé en ce que** :
lors de la détermination du moment de rappel à appliquer, la au moins une autre valeur paramétrique caractérisant une situation de marche est prise en compte.
